# DEMANDE DE BREVET EUROPEEN

(11) **EP 2 796 037 A2**
(43) Date de publication de la demande: **29.10.2014**
(21) Numéro de dépôt: 14160592.3
(22) Date de dépôt: 18.03.2014
(51) Int. Cl.: A01K 39/02

(54) **Dispositif d'abreuvement pour animaux**

(30) Priorité: 18.03.2013 FR 1352370
(71) Demandeur: Earl Labadie, 64410 Arzacq Arraziguet (FR)
(72) Inventeur: Darthos, Yves, 64410 Malaussanne (FR); Gourdon, Nathalie, 64410 Malaussanne (FR)
(74) Mandataire: Cornuejols, Georges

(57) **Abrégé**

Le dispositif d'abreuvement pour d'alimentation en eau des animaux d'élevage, tels que palmipèdes et autres volatiles se caractérise essentiellement en ce qu'il est constitué par au moins une rampe horizontale (1), tubulaire, d'alimentation en eau, portée au-dessus du sol par un châssis formé par des chevalets (4) parallèles, pliables, disposés à espacement les uns des autres, se développant chacun selon un plan vertical, et constitués chacun par deux bras tubulaires (4a, 4b), formant piétement, articulés l'un à l'autre afin de former un ciseau, ladite rampe (1) étant portée par l'extrémité supérieure de l'un des bras (4a, 4b) du chevalet (4) et étant pourvue de moyens de raccordement en eau et/ou de moyens de raccords entre rampes successives et de moyens (3) d'alimentation en eau régulièrement espacés, sous forme de pipette, permettant aux animaux de s'alimenter en eau à volonté.

## Description

### Domaine technique.

La présente invention est du domaine des matériels utilisés pour l'abreuvement des animaux élevés en plein air notamment, et concerne un nouveau type de dispositif d'abreuvement pour l'alimentation en eau des animaux d'élevage tels que palmipèdes par exemple.

### État de la technique antérieure.

On connaît de l'état de la technique des abreuvoirs formés par des bacs disposés à même le sol. L'intérêt d'un tel système d'abreuvement réside dans le fait qu'il est accessible à des animaux de toute taille. L'inconvénient réside dans le fait que l'eau qu'il contient est généralement souillée par les animaux eux-mêmes et peut constituer un vecteur de propagation de maladies.

De plus, les habitudes comportementales des palmipèdes sont à l'origine de pertes excessives d'eau, ces derniers cherchant systématiquement à se baigner ou s'ébrouer dans les réserves d'eau à disposition. Les éclaboussures en résultant sont ainsi à l'origine de pertes conséquentes d'eau et de la formation autour de ces abreuvoirs, de zones boueuses, bien souvent chargées en fientes, et pouvant constituer un milieu particulièrement favorable au développement microbien.

Il existe également des dispositifs d'abreuvement formés d'une ou plusieurs rampes disposées sur des structures porteuses. Les rampes de ces dispositifs sont formées par des conduites d'eau dotées de pipettes d'abreuvement prévues pour être actionnées par les animaux. De tels dispositifs sont prévus notamment pour équiper des salles d'élevage et sont installés à poste fixe, habituellement au-dessus d'une goulotte de récupération des écoulements d'eau.

On connaît aussi de l'état de la technique des dispositifs d'abreuvement mobiles pour élevage en plein air comprenant un châssis recevant une ou plusieurs rampes avec pipettes d'abreuvement. Ces dispositifs posent le problème du réglage de la hauteur des rampes en fonction de la taille des animaux et, en raison de leurs poids élevés, ne sont déplaçables qu'à l'aide d'engins de transport. Or pour des raisons sanitaires évidentes, il est nécessaire de pouvoir les changer de place régulièrement, ce déplacement devant pouvoir s'effectuer d'une manière rapide et aisée, sans effort, de préférence à la main et donc sans usage d'engins de manutention.

En outre, toujours pour des raisons sanitaires, les dispositifs d'abreuvement doivent pouvoir être aisément nettoyés.

Enfin ces dispositifs d'abreuvement doivent pouvoir résister à la corrosion.

### Exposé de l'invention.

La présente invention vise à obvier ces inconvénients en proposant un dispositif d'abreuvement léger et repliable, facile à transporter à la main par une personne et aisément adaptable à la taille des animaux.

Un autre but de la présente invention est de proposer un dispositif d'abreuvement facile à construire pour en diminuer le coût.

Un autre but de la présente invention est de proposer un dispositif d'abreuvement particulièrement robuste, d'une mise en oeuvre facile et apte à résister au pouvoir corrosif du milieu dans lequel il doit être utilisé.

À cet effet le dispositif d'abreuvement pour d'alimentation en eau des animaux d'élevage, tels que des palmipèdes ou autres volatiles, se caractérise essentiellement en ce qu'il est constitué par au moins une rampe horizontale, tubulaire, portée au-dessus du sol par un châssis formé par des chevalets parallèles, pliables, disposés à espacement les uns des autres, se développant chacun selon un plan vertical, et constitués chacun par deux bras tubulaires, formant piétement, articulés l'un à l'autre afin de former un ciseau, ladite rampe étant portée par l'extrémité supérieure de l'un des bras du chevalet et étant pourvue de moyens de raccordement en eau et/ou de moyens de raccords entre rampes successives et de moyens d'alimentation en eau, régulièrement espacés, permettant aux animaux de s'alimenter en eau à volonté.

En raison de telles dispositions, le dispositif d'abreuvement est facilement transportable à la main.

Préférentiellement, selon une autre caractéristique de l'invention, les dits moyens d'alimentation en eau des animaux comprennent des pipettes, comportant chacune :
- un corps de pipette dans lequel est réalisé un perçage longitudinal traversant dans lequel est formé un siège de soupape,
- une soupape comprenant :
- une tête de soupape et une tige de soupape, la soupape pouvant occuper, soit une position d'obturation du perçage selon laquelle la tête de soupape est en appui sur le siège de soupape pour interrompre l'écoulement du liquide, soit une position de dégagement selon laquelle la tête de soupape est écartée du siège de soupape pour permettre l'écoulement du liquide, la tige de soupape s'étendant dans le perçage sous le siège de soupape,
ledit corps de pipette comprenant :
- une partie supérieure prévue pour être engagée dans la rampe, afin que le perçage longitudinal que comporte ledit corps soit en relation de communication avec le volume interne de la rampe,
- une partie inférieure extérieure à la rampe,
- la tige de soupape par sa partie inférieure étant en débordement par rapport à la partie inférieure du corps de pipette, afin que ladite soupape, sous l'effet de l'action du palmipède sur la partie débordante de la tige de soupape puisse être actionnée dans le sens de l'ouverture afin de permettre l'écoulement de l'eau. Une telle disposition évite toute perte inutile d'eau.

Selon une autre caractéristique de l'invention, le dispositif d'abreuvement comporte deux rampes horizontales, parallèles installées en extrémités supérieures des bras formant les chevalets.
Une telle disposition double la capacité d'abreuvement du dispositif.

Selon une autre caractéristique de l'invention, le ciseau que forme chaque chevalet est à ouverture variable pour permettre le réglage en hauteur des rampes.

Le dispositif d'abreuvement est ainsi aisément adaptable à la taille des animaux et par voie de conséquence à leur croissance.

Avantageusement, selon une autre caractéristique de l'invention, le degré d'ouverture du ciseau que forme chaque chevalet et la hauteur par rapport au sol de la ou de chaque rampe est réglable par un lien souple monté en tension entre deux organes d'attache fixés pour l'un à l'un des deux bras et pour l'autre à l'autre bras et ce à distance de leur axe d'articulation mutuel. Le degré d'ouverture du ciseau est ainsi déterminé par la longueur tendue du lien souple comprise entre les deux organes d'attache.

Suivant une autre caractéristique de l'invention, le lien souple est formé par au moins une chaîne et l'un des deux organes d'attache ou premier organe d'attache est formé par une vis engagée dans un taraudage formé dans l'un des bras, l'un des maillons terminaux de la chaîne étant engagé autour de la tige de la vis.

Suivant une autre caractéristique de l'invention, l'autre organe d'attache ou second organe d'attache est constitué par un tube fixé à l'autre bras, ce tube comportant une extrémité proximale en regard du premier organe d'attache et une extrémité distale, opposée à la précédente, ledit tube comportant depuis son extrémité distale, selon l'une de ses génératrices, une fente courant sur une portion de la longueur du dit tube, ladite fente étant prévue pour recevoir l'un des maillons de la chaîne.

L'intérêt de cette disposition est de réaliser un organe d'attache rapide. Le maillon correspondant de la chaîne pourra ainsi être engagé aisément dans la fente et dégagé tout aussi aisément de cette dernière.

Suivant une autre caractéristique de l'invention, aux l'extrémités supérieures des bras des chevalets sont disposés des paliers dans lesquels les rampes font rotation autour de leur axe longitudinal pour positionner les moyens d'alimentation en eau de manière à ce qu'ils soient accessibles aux animaux.

Suivant une autre caractéristique de l'invention, les rampes sont en un matériau ductile et les pipettes sont vissés en force dans des taraudages traversants, radiaux, qui y sont ménagées ce qui évite l'usage de joints d'étanchéité.

Préférentiellement, selon une autre caractéristique de l'invention, les rampes sont en aluminium ou en un matériau équivalent.

Alternativement, selon une autre caractéristique de l'invention, chaque pipette est portée par un collier fixé à la rampe, et l'étanchéité est réalisée par un joint d'étanchéité monté autour du corps de pipette et disposé entre le dit collier et la dite rampe.

Suivant une autre caractéristique, chaque collier est formé de deux demi-colliers assemblés l'un à l'autre, l'un des deux demi-colliers étant doté d'un taraudage traversant dans lequel est engagée en vissage une partie filetée externe du corps de pipette.

Suivant une autre caractéristique de l'invention, la rampe ou chaque rampe comporte une chemise interne formée par un élément tubulaire en matériau synthétique, la rampe est dotée de perçages radiaux traversants, régulièrement espacés, prévus pour recevoir chacun la partie supérieure du moyen d'alimentation en eau correspondant et la chemise est dotée de perçages radiaux traversants situés respectivement en regard des perçages radiaux traversants de la rampe, les dits perçages radiaux de la chemise recevant de manière étanche, chacun, la partie supérieure du moyen d'alimentation en eau correspondant.

Suivant une autre caractéristique de l'invention, les perçages radiaux pratiqués dans la chemise sont des taraudages, la partie supérieure du corps de pipette de chaque pipette est filetée et est engagée en vissage dans le taraudage correspondant. De préférence, la partie filetée de la pipette est engagée en léger serrage dans le taraudage correspondant ce qui assure ou contribue à assurer l'étanchéité.

Selon une autre caractéristique l'embout de raccordement d'au moins une des rampes comporte un robinet.

Une telle disposition permet d'interrompre l'arrivée d'eau.

### Bref exposé des figures et des dessins.

D'autres buts, avantages et caractéristiques de l'invention apparaitront à la lecture de la description ci-après d'une forme de réalisation de l'invention illustrée par les dessins joints donnés à titre d'exemple non limitatif en lesquels :
- la figure 1 représente une vue de la rampe en position déployée
- la figure 2 représente une vue de la rampe en position repliée.

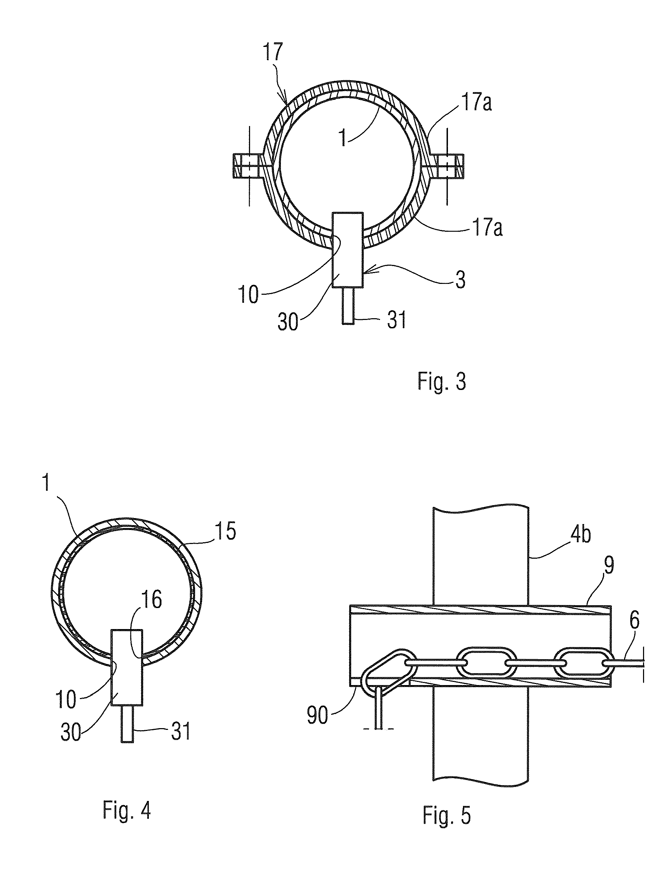

- la figure 3 représente une vue en coupe de deux demi-colliers montés sur la rampe,
- la figure 4 est une vue en coupe d'une rampe équipée d'une chemise interne,
- la figure 5 est une vue en coupe d'une variante d'exécution d'un second organe d'attache du lien souple.

### Description d'une forme préférée de réalisation.

Tel que représenté, le dispositif d'abreuvement pour l'alimentation des animaux, mais non limitativement des palmipèdes, est constitué d'un châssis en aluminium ou autre matériau rigide de densité relativement faible, portant au-dessus du sol deux rampes d'abreuvement parallèles 1, horizontales, pourvues à chaque extrémité d'un raccord 2 de jonction soit à un conduit d'alimentation en eau sous pression, soit avec une autre rampe 1. De préférence, au moins un des embouts de raccordement 2 comporte un robinet, non représenté, afin pouvoir de couper ou de libérer l'arrivée d'eau dans la ou les rampes 1 choisies.

Chaque rampe 1 est formée par un tube métallique en aluminium, de section droite circulaire de préférence, constituant conduite d'amenée d'eau. Il va de soi que tout autre matière ductile pourra être utilisée pour la réalisation des rampes 1. De même pourra être utilisée une matière synthétique de rigidité satisfaisante.

Chaque rampe 1 est dotée de moyens 3 d'alimentation en eau régulièrement espacés formés par des pipettes d'abreuvement 3. Ces pipettes 3 sont en relation de communication avec le volume interne de la rampe et s'étendent radialement par rapport à la dite rampe. Ces pipettes 3 occupent une position inférieure par rapport à la rampe en sorte que le animaux puissent les utiliser pour avoir accès au liquide. Chaque pipette d'abreuvement 3 est fixée à la rampe 1 et comprend un corps 30 de pipette dont la partie supérieure est à l'intérieur de la rampe 1, c'est-à-dire dans le volume interne de la rampe 1 et la partie inférieure à l'extérieur de la rampe 1. Plus précisément, la ou chaque rampe 1 comporte des perçages radiaux traversants 10 prévus pour recevoir chacun la partie supérieure du corps 30 de pipette de la pipette 3 correspondante, ces perçages radiaux traversants 10 étant formés dans la paroi de ladite rampe 1.

Le corps 30 de pipette est doté d'un perçage longitudinal traversant, dans lequel est formé un siège de soupape. Chaque pipette 3 comporte une soupape comprenant une tête de soupape et une tige 31 de soupape. La soupape peut occuper, soit une position d'obturation du perçage selon laquelle la tête de soupape est en appui sur le siège de soupape pour interrompre l'écoulement du liquide, soit une position de dégagement selon laquelle la tête de soupape est écartée du siège de soupape pour permettre l'écoulement du liquide, la tige 31 de soupape s'étendant dans le perçage sous le siège de soupape.

La tige 31 de soupape, par sa partie inférieure, est en débordement par rapport à la partie inférieure du corps 30 de pipette afin que ladite soupape, sous l'effet de l'action du palmipède sur la partie débordante de la tige 31 de soupape puisse être actionnée dans le sens de l'ouverture et permettre l'écoulement du liquide.

La partie supérieure du corps 30 de pipette est agencée en embout fileté et chaque perçage traversant 10 est formé par un taraudage afin de recevoir en vissage la partie supérieure du corps 30 de pipette de la pipette 3 correspondante. Avantageusement, chaque pipette 3 est vissée en force dans le taraudage traversant ce qui, en combinaison avec la nature du matériau ductile constitutif de la rampe, réalise une bonne étanchéité sans usage de joints d'étanchéité.

Selon une variante d'exécution, la ou chaque rampe 1 comporte une chemise interne 15 formée par un élément tubulaire en matériau synthétique. Cette chemise 15 est dotée de perçages radiaux traversants 16 situés respectivement en regard des perçages radiaux traversants 10 de la rampe, les dits perçages radiaux 16 recevant de manière étanche la partie supérieure du moyen d'alimentation en eau correspondant 3. Dans la forme pratique d'exécution, les perçages 16 pratiqués dans la chemise 15 sont des taraudages et les perçages 10 sont lisses. Toujours selon cette forme d'exécution la partie supérieure du corps 30 de pipette de chaque pipette 3 est filetée et est engagée en vissage dans le taraudage 16 correspondant de la chemise 15. La partie supérieure du corps 30 peut être vissée en force dans le taraudage 16 correspondant afin de contribuer ou réaliser une étanchéité entre la pipette et la chemise.

L'élément tubulaire constitutif de la chemise 15 peut être monté en léger serrage dans la rampe 1 ou bien avec un jeu fonctionnel. Dans ce cas, cet élément tubulaire sera directement raccordé à l'embout de raccordement 2.

Alternativement, chaque pipette 3 est portée par un collier 17 fixé à la rampe 1, et l'étanchéité est réalisée par un joint d'étanchéité (non représenté) monté autour du corps 30 de pipette et disposé entre le dit collier 17 et la dite rampe 1. Chaque collier 17 est formé de deux demi-colliers 17a assemblés l'un à l'autre et l'un des deux demi-colliers 17a est doté d'un taraudage traversant dans lequel est engagée en vissage l'embout fileté du corps 30 de pipette 3.

Le châssis est formé d'une succession de chevalets 4 se développant chacun selon un plan vertical perpendiculaire à l'axe longitudinal des rampes. Ces chevalets, repliables, sont formés chacun de deux bras 4a, 4b articulés l'un à l'autre selon un axe horizontal situé de préférence à mi-distance de leurs extrémités. Ces deux bras 4a, 4b forment ainsi un ciseau.

De préférence, chaque bras 4a, 4b est formé à partir d'un profilé tubulaire du commerce, en aluminium de préférence, de section droite carrée ou rectangulaire sans que cela soit limitatif.

Avantageusement, l'axe d'articulation des deux bras l'un à l'autre est formé par une tige cylindrique engagée dans des perçages traversants formés dans les deux bras 4a, 4b. Cette tige cylindrique pourra être la tige fileté de la vis d'un boulon approprié.

Les deux bras 4a, 4b de chaque chevalet 4 reposent par leur extrémité inférieure sur le sol. Les rampes 1 sont montées en extrémité supérieure des bras 4a, 4b des chevalets 4. Ces derniers étant repliables, les rampes 1 peuvent alors être rapprochées l'une de l'autre, par exemple pour faciliter le transport du dispositif d'abreuvement d'un emplacement à l'autre et être écartées plus ou moins l'une de l'autre pour régler leur hauteur par rapport au sol, et ce par variation du degré d'ouverture du ciseau que forme chaque chevalet 4. De cette manière le dispositif d'abreuvement est constamment adaptable à la taille des animaux.

Selon la forme préférée de réalisation, l'écartement des bras 4a, 4b est réglable au moyen d'un lien souple 6 monté en tension entre deux organes d'attache fixés pour l'un à l'un des deux bras 4a, 4b et pour l'autre à l'autre bras 4b, 4a et ce à distance et de préférence au-dessus de leur axe d'articulation mutuel.

Avantageusement, le lien souple 6 est formé par une chaîne et l'un au moins des deux organes d'attache est formé par une vis engagée dans un taraudage formé dans l'un des bras, l'un des deux maillons terminaux de la chaîne 6 étant engagé autour de la tige de la vis.

Selon une première forme de réalisation, l'autre organe d'attache ou second organe d'attache est également constitué par une vis engagée par sa tige d'abord dans l'autre maillon terminal de la chaîne 6 et ensuite dans un taraudage formé dans l'autre bras et la variation de la longueur tendue de chaîne est obtenue par usage d'un crochet 7 monté en fixation sur l'un des maillons intermédiaire de la chaîne et configuré apte à recevoir l'un des autres maillons intermédiaires de la chaîne. Par choix de ce dernier maillon, est ajustée la longueur tendue de chaîne et par voie de conséquence, la hauteur des rampes au-dessus du sol. Alternativement, selon une autre forme de réalisation de l'invention, le second organe d'attache est constitué par un crochet fixé au bras correspondant en vis-à-vis du précédent.

Selon une forme préférée de réalisation, le second organe d'attache est constitué par un tube 9 fixé à l'autre bras et s'étendant de manière perpendiculaire par rapport à ce dernier et de manière parallèle au plan géométrique que détermine les deux bras 4a, 4b correspondant. Ce tube comporte une extrémité proximale en regard du premier organe d'attache et une extrémité distale, opposée à la précédente, la chaîne constitutive du lien souple 6 étant engagée dans le tube 9 depuis l'extrémité proximale de ce dernier vers l'extrémité distale. Ce tube 9 comporte depuis son extrémité distale, selon l'une de ses génératrices, de préférence une génératrice inférieure, une fente 90 de largeur légèrement supérieure à l'épaisseur du maillon. Cette fente 90 court sur une portion de la longueur du tube 9 et l'un des maillons de la chaîne. La variation de la longueur tendue de la chaîne est effectuée par engagement du maillon correspondant de la chaîne dans la fente 90. Le maillon immédiatement inférieur, (maillon externe au tube), du fait de sa position perpendiculaire par rapport au maillon engagé dans la fente 90, ne peut donc pénétrer dans cette dernière et se bloque contre la face externe du tube 9.

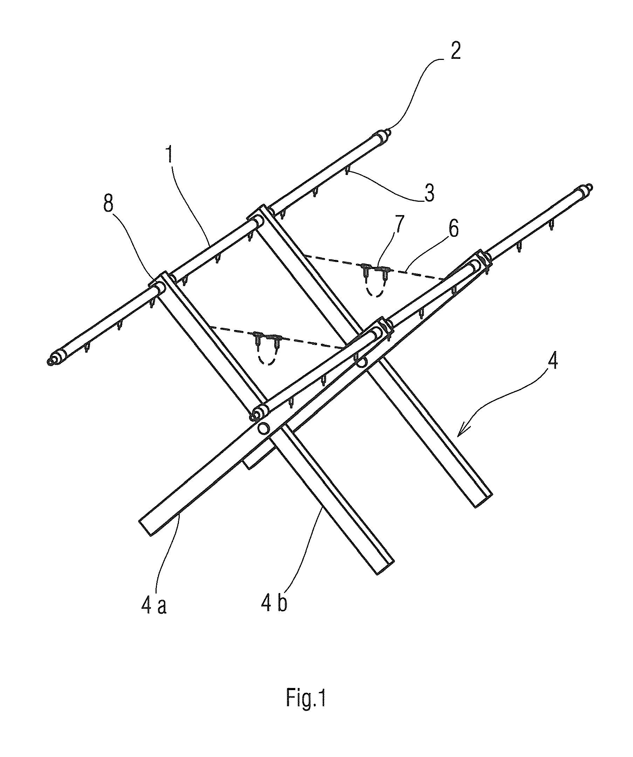

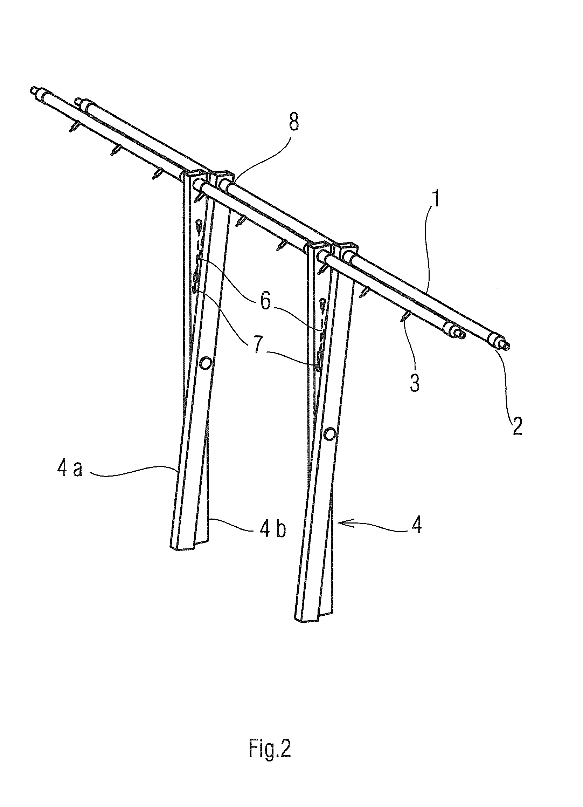

La variation de la hauteur des rampes 1 s'accompagne d'une modification de la position angulaire de chacune d'elle par rapport à un repère fixe et donc par une modification de la position angulaire des pipettes 3 ce qui peut interdire ou rendre difficile leur accès aux animaux. Pour cette raison, chaque rampe 1 est montée en extrémité de chaque bras 4a, 4b correspondant avec possibilité de rotation selon son axe longitudinal. Ainsi, comme représenté aux figures 1, 2 l'extrémité supérieure de chaque bras 4a, 4b de chaque chevalet 4 est dotée d'un palier 8 tubulaire traversant, dans lequel est engagée en léger serrage la rampe 1 correspondante. Cette disposition interdit la rotation de la rampe sous l'effet du poids des pipettes 3 lorsqu'elles sont, par exemple, positionnées verticalement vers le haut afin d'éviter le gel lors de la saison hivernale, mais laisse possible cette rotation sous l'effet de l'action de l'utilisateur. Grâce à cette disposition, par rotation de la rampe 1 autour de son axe longitudinal les pipettes 3 pourront toujours être orientées vers le bas, par exemple verticalement.

Les rampes 1 seront immobilisées en translation par rapport aux paliers 8 qui les supportent par tous moyens connus de la personne de l'art. Par exemple, par des collets fixés à la rampe. Ainsi les rampes constituent des éléments du châssis et assurent l'entretoisement des chevalets.

Selon une forme pratique de réalisation, chaque palier 8 est formé par une bague cylindrique montée en fixation dans des perçages traversants formés en extrémité supérieure du bras 4a, 4b correspondant. Chaque bague sera suffisamment longue pour conserver la perpendicularité entre les rampes 1 et les chevalets 4. On écarte ainsi le risque de déformation irréversible du dispositif d'abreuvement et notamment des rampes 1 sous l'effet de contraintes ou de charges inhabituelles. Par exemple, la longueur de chaque palier sera supérieure à trois fois la valeur du diamètre de la rampe 1.

L'avantage du dispositif d'abreuvement selon l'invention est sa légèreté qui facilite un déplacement manuel contrairement aux dispositifs connus montés sur roues et qui nécessitent l'usage d'un véhicule tracteur. Un autre avantage réside dans sa simplicité et sa robustesse et enfin un dernier avantage est d'être repliable ce qui en facilite la manutention et le stockage.

Il va de soi que la présente invention peut recevoir tous aménagements et variantes du domaine des équivalents techniques sans pour autant sortir du cadre du présent brevet tel que défini par les revendications ci-après.

## Revendications

1. Dispositif d'abreuvement pour d'alimentation en eau des animaux d'élevage, tels que palmipèdes et autres volatiles **caractérisé en ce qu'**il est constitué par au moins une rampe horizontale (1), tubulaire, d'alimentation en eau, portée au-dessus du sol par un châssis formé par des chevalets (4) parallèles, pliables, disposés à espacement les uns des autres, se développant chacun selon un plan vertical, et constitués chacun par deux bras tubulaires (4a, 4b), formant piétement, articulés l'un à l'autre afin de former un ciseau, ladite rampe (1) étant portée par l'extrémité supérieure de l'un des bras (4a, 4b) du chevalet (4) et étant pourvue d'embouts de raccordement en eau et/ou de moyens de raccords entre rampes successives et de moyens (3) d'alimentation en eau, régulièrement espacés, permettant aux animaux de s'alimenter en eau à volonté.

2. Dispositif selon la revendication précédente, **caractérisé en ce qu'**il comporte deux rampes horizontales (1), parallèles, installées en extrémité supérieure des bras (4a, 4b) formant les chevalets (4).

3. Dispositif selon l'une quelconque des revendications précédentes, **caractérisé en ce que** les moyens (3) d'alimentation en eau comprennent des pipettes (6), comportant chacune :
- un corps (30) de pipette dans lequel est réalisé un perçage longitudinal traversant dans lequel est formé un siège de soupape,
- une soupape comprenant :
- une tête de soupape et une tige (31) de soupape, la soupape pouvant occuper, soit une position d'obturation du perçage selon laquelle la tête de soupape est en appui sur le siège de soupape pour interrompre l'écoulement du liquide, soit une position de dégagement selon laquelle la tête de soupape est écartée du siège de soupape pour permettre l'écoulement du liquide, la tige de soupape s'étendant dans le perçage sous le siège de soupape,
ledit corps (30) de pipette comprenant :
- une partie supérieure prévue pour être engagée dans la rampe, afin que le perçage longitudinal que comporte ledit corps (30) soit en relation de communication avec le volume interne de la rampe,
- une partie inférieure extérieure à la rampe,
- la tige (31) de soupape par sa partie inférieure étant en débordement par rapport à la partie inférieure du corps (30) de pipette, afin que ladite soupape, sous l'effet de l'action du palmipède sur la partie débordante de la tige (31) de soupape puisse être actionnée dans le sens de l'ouverture afin de permettre l'écoulement de l'eau.

4. Dispositif selon l'une quelconque des revendications précédentes, **caractérisé en ce que** le ciseau que forme chaque chevalet (4) est à ouverture variable pour permettre le réglage en hauteur des rampes (1).

5. Dispositif selon la revendication précédente, **caractérisé en ce que** le degré d'ouverture du ciseau que forme chaque chevalet (4) et la hauteur par rapport au sol de la ou de chaque rampe (1) est réglable par un lien souple (6) monté en tension entre deux organes d'attache fixés pour l'un à l'un des deux bras (4a) ou (4b) et pour l'autre, à l'autre bras et ce à distance de leur axe d'articulation mutuel.

6. Dispositif selon la revendication précédente, **caractérisé en ce que** le lien souple (6) est une chaîne et que l'un au moins des deux organes d'attache est formé par une vis engagée dans un taraudage formé dans l'un des bras (4a) (4b), l'un des deux maillons terminaux de la chaîne (6) étant engagé autour de la tige de la vis.

7. Dispositif selon la revendication précédente, **caractérisé en ce que** l'autre organe d'attache ou second organe d'attache est constitué par un tube (9) fixé à l'autre bras, ce tube (9) étant prévu pour recevoir la chaîne (6) et comportant une extrémité proximale en regard du premier organe d'attache et une extrémité distale, opposée à la précédente, ledit tube (9) comportant depuis son extrémité distale, selon l'une de ses génératrices, une fente (90) courant sur une portion de la longueur du dit tube, ladite fente étant prévue pour recevoir un des maillons de la chaîne (6).

8. Dispositif selon l'une quelconque des revendications précédentes, **caractérisé en ce que** chaque rampe (1) est montée en extrémité de chaque bras (4a, 4b) correspondant avec possibilité de rotation selon son axe longitudinal.

9. Dispositif selon la revendication précédente, **caractérisé en ce que** l'extrémité supérieure de chaque bras (4a, 4b) de chaque chevalet (4) est dotée d'un palier (8) tubulaire traversant, dans lequel est engagée en léger serrage la rampe (1) correspondante.

10. Dispositif selon l'une quelconque des revendications précédentes, **caractérisé en ce que** la ou chaque rampe (1) comporte une chemise interne (15) formée par un élément tubulaire en matériau synthétique, que la rampe (1) est dotée de perçages radiaux traversants (10) régulièrement espacés prévus pour recevoir chacun la partie supérieure du moyen d'alimentation en eau (3) correspondant et que la chemise (15) est dotée de perçages radiaux traversants (16) situés respectivement en regard des perçages radiaux traversants de la rampe, les dits perçages radiaux (16) recevant chacun de manière étanche la partie supérieure du moyen d'alimentation en eau correspondant (3).

11. Dispositif selon la revendication précédente, **caractérisé en ce que** les perçages (16) pratiqués dans la chemise (15) sont des taraudages, que la partie supérieure du corps (30) de pipette de chaque pipette (3) est filetée et est engagée en vissage dans le taraudage (16) correspondant.

12. Dispositif selon l'une quelconque des revendications 3 à 9, **caractérisé en ce que** les rampes (1) sont en un matériau ductile, et que les pipettes (6) sont vissées en force dans des taraudages, pratiqués dans les rampes ce qui évite les joints d'étanchéité.

13. Dispositif selon la revendication 3, **caractérisé en ce que** chaque pipette est portée par un collier (17) fixé à la rampe (1), et que l'étanchéité est réalisée par un joint d'étanchéité monté autour du corps (30) de la pipette (3) et disposé entre ledit collier (17) et la dite rampe et que chaque collier (17) est formé de deux demi-colliers (17a) assemblés l'un à l'autre, l'un des deux demi-colliers (17a) étant doté d'un taraudage traversant dans lequel est engagée en vissage l'embout fileté du corps (30) de pipette.

14. Dispositif selon l'une quelconque des revendications précédentes, **caractérisé en ce que** les rampes (1) sont en aluminium.

15. Dispositif selon l'une quelconque des revendications précédentes, **caractérisé en ce que** l'embout de raccordement (2) d'au moins une des rampes (1) comporte un robinet.
